# FASCICULE DE BREVET EUROPEEN

(11) **EP 1 796 826 B1**
(45) Date de publication et mention de la délivrance du brevet: **07.07.2010**
(21) Numéro de dépôt: 05805042.8
(22) Date de dépôt: 05.09.2005
(51) Int. Cl.: B01J 8/24, B01D 53/68

(54) **DISPOSITIF D'ALIMENTATION ET DISTRIBUTION D'UNE MATIERE PULVERULENTE DANS UN FLUX GAZEUX ASCENDANT, ET REACTEUR EQUIPE D'UN TEL DISPOSITIF**
VORRICHTUNG ZUR ZUFÜHRUNG/AUSGABE EINES PULVRIGEN MATERIALS IN EINEM AUFWÄRTS-GASSTROM UND REAKTOR DAMIT
DEVICE FOR SUPPLYING AND DISPENSING A POWDERY MATERIAL IN AN ASCENDING GAS STREAM, AND REACTOR EQUIPPED WITH SAME

(30) Priorité: 10.09.2004 FR 0409623
(43) Date de publication de la demande: 20.06.2007
(73) Titulaire: SOLIOS Environnement, 78100 Saint-Germain-en-Laye (FR)
(72) Inventeur: GUIBET, Jean-Pierre, FR-27920 St. Pierre de Bailleul (FR); DEPAUW, Jean-Pierre, FR-92100 Boulogne Billancourt (FR)
(74) Mandataire: Burbaud, Eric
(86) Numéro de dépôt international: PCT/FR2005/002204
(87) Numéro de publication internationale: WO 2006/030096

(56) Documents cités:
- US-A- 3 909 956
- US-A- 4 501 599
- US-A- 4 828 435
- PATENT ABSTRACTS OF JAPAN vol. 13, no. 340, 31 juillet 1989 (1989-07-31) -& JP 01 117132 A (NIPPON STEEL), 10 mai 1989 (1989-05-10)

## Description

L'invention concerne un dispositif d'alimentation et distribution d'une matière pulvérulente dans un flux gazeux ascendant, éventuellement chaud et empoussiéré, dans un réacteur sensiblement vertical de mise en contact de cette matière pulvérulente avec le flux gazeux, et l'invention a également pour objet un réacteur, en particulier d'épuration d'au moins un effluent polluant d'un flux gazeux ascendant dans le réacteur, qui est équipé d'un dispositif d'alimentation et distribution de matière pulvérulente selon la présente invention.

On connaît déjà des dispositifs d'alimentation et distribution de matières pulvérulentes tels que présentés ci-dessus, équipant des réacteurs verticaux de mise en contact de matières pulvérulentes, notamment d'agents de neutralisation chimique et/ou physique d'au moins un effluent à épurer des flux gazeux ascendants dans les réacteurs, avec ces flux gazeux, ces dispositifs connus comprenant des moyens de répartition d'au moins une matière pulvérulente dans le flux gazeux correspondant, qui sont alimentés par des moyens d'alimentation gravitaire et des moyens de transport de la matière pulvérulente en lit fluidisé.

Ces dispositifs d'alimentation et distribution connus permettent de mettre une matière pulvérulente, en particulier adsorbante ou chimiquement réactive, en contact avec des gaz, éventuellement chauds et empoussiérés, contenant des effluents polluants qu'il convient d'épurer, dans des réacteurs équipés à cet effet. Ces traitements, résultant de la mise en contact des flux gazeux ascendants dans ces réacteurs avec des particules de ces matières pulvérulentes, ont pour but, notamment, de débarrasser les gaz de poussières qui viennent se fixer sur ces particules, et/ou de composés gazeux polluants qui sont adsorbés ou se combinent avec celles-ci. Par commodité, dans la suite du présent mémoire descriptif, l'agent de neutralisation chimique et/ou physique, que constitue une matière pulvérulente, adsorbante ou chimiquement réactive, utilisée pourra être désigné matière adsorbante ou adsorbant.

Bien d'autres procédés que des procédés d'épuration ou de captation par voie physico-chimique d'effluents contenus dans des flux gazeux, et supposant une mise en contact de particules d'une matière pulvérulente avec lesdits flux gazeux, peuvent être mis en oeuvre dans de nombreux secteurs industriels, à l'aide de dispositifs d'alimentation et distribution selon l'invention. Toutefois, dans la suite du présent mémoire descriptif, et parce que c'est dans ces applications que l'invention semble présenter le plus d'intérêt pour le déposant, le dispositif d'alimentation et distribution de l'invention ainsi que le réacteur selon l'invention, équipé d'un tel dispositif, sont décrits en relation avec les applications particulières mentionnées ci-dessus, pour l'épuration d'au moins un effluent polluant d'un flux gazeux ascendant, et en particulier un flux gazeux provenant de cuves d'électrolyse d'aluminium ou de fours de cuisson d'anodes pour l'électrolyse d'aluminium, et dans lequel réacteur est introduite et distribuée une matière pulvérulente en tant qu'agent de neutralisation chimique et/ou physique desdits effluents polluants, et en particulier de l'alumine fraîche et/ou recyclée, ou de la poudre de coke, afin de pouvoir neutraliser par adsorption ou par réaction chimique notamment des éléments fluorés, en particulier HF et des composés gazeux fluorés, ou des goudrons, brais et autres éléments organiques, tels que des hydrocarbures aromatiques polycycliques.

Il est bien connu que les traitements précités nécessitent un bon contact entre les particules de matière pulvérulente et les constituants des flux gazeux ascendants traités, donc une bonne répartition de la matière pulvérulente dans les flux gazeux contenant des effluents polluants gazeux et/ou sous forme de poussières.

Les premières installations de traitement de gaz pollués utilisaient des laveurs en voie humide, qui présentent un certain nombre d'inconvénients, tenant notamment au stockage, à l'alimentation, à la distribution, à la récupération, au filtrage et au recyclage de liquides.

Au cours du temps, ces installations ont été remplacées par des unités de traitement à sec, faisant notamment utilisation de matières adsorbantes.

Selon les industries qui les génèrent en amont, les effluents polluants à capter, pour les neutraliser et/ou les épurer, sont nombreux. En dehors du CO₂ et des NOx, les gaz rejetés peuvent, avant traitement, contenir du SO₂, HCl, HF, d'autres composés fluorés, des goudrons, brais et autres éléments organiques tels que des hydrocarbures aromatiques polycycliques, dénommés P.A.H. (en anglais Polycyclic Aromatic Hydrocarbons). Ces derniers éléments peuvent être captés par un traitement à sec des gaz nécessitant la répartition, dans cesdits gaz, d'adsorbants spécifiques.

Dans les premières installations de traitement à sec de gaz contenant des éléments polluants, la matière pulvérulente adsorbante spécifique était introduite par un conduit débouchant latéralement dans des conduites verticales et/ou horizontales du circuit aéraulique d'évacuation des gaz à l'atmosphère, et dans lesquelles le régime d'écoulement était proche d'un régime uniforme. Dans de telles installations, la matière adsorbante est entraînée en co-courant, mais le mélange particules adsorbantes-gaz, et donc particules adsorbantes-éléments polluants, est trop limité pour assurer une épuration satisfaisante.

Une première amélioration a consisté à créer des turbulences dans le flux de gaz traité afin d'améliorer le mélange entre le gaz et les particules solides de la matière pulvérulente, ainsi que le temps de contact entre les effluents polluants et les particules adsorbantes. Mais ce procédé conduit à une augmentation importante de l'abrasion des parois internes du réacteur ainsi que des parois exposées dans ce dernier, d'éléments de circuits traversant le réacteur ou disposés dans ce dernier, d'où une maintenance plus importante et plus coûteuse.

Dans le cas particulier du traitement de flux gazeux provenant de cuves d'électrolyse d'aluminium, et pour lequel l'agent de neutralisation est de l'alumine, les turbulences créées dans le flux de gaz pour améliorer les mélanges et temps de contact entre l'alumine pulvérulente et les effluents polluants, favorisent également une réduction de la taille des particules d'alumine par attrition, et donc une perte de la qualité de l'alumine pulvérulente, qui est défavorable au procédé de fabrication de l'aluminium par ré-injection dans les cuves d'électrolyse de l'alumine récupérée après le traitement d'épuration et chargée de composés fluorés également nécessaires à l'électrolyse de l'aluminium.

Le brevet FR 2 534 831 a proposé une autre amélioration, consistant à utiliser des buses d'injection multiples et réparties pour injecter de la matière pulvérulente adsorbante dans une conduite verticale cylindrique ou à Venturi (convergent-divergent), avec une buse centrale injectant de la matière adsorbante fraîche et des buses excentrées pour injecter de la matière adsorbante recyclée, ces dernières étant réparties afin d'uniformiser au mieux l'injection de la matière pulvérulente dans toute la section transversale de la conduite ou colonne verticale. A cet effet, en outre, chaque buse est équipée d'un éclateur de jet, qui permet la diffusion de la matière pulvérulente adsorbante sous forme d'une nappe facilement dispersée et mélangée avec le flux gazeux ascendant.

L'inconvénient d'une telle installation est que l'ensemble des buses et des éclateurs ou brise-jets crée une perte de charge non négligeable, en raison de la place occupée par ces éléments dans la colonne verticale, et, de plus, des difficultés de maintenance sont liées notamment aux tuyauteries constituant les corps des buses.

Par les documents WO 92/02 289 et WO 95/13 866, on connaît d'autres installations dans lesquelles un réacteur cylindrique sensiblement vertical comporte un ou plusieurs étages d'anneaux périphériques superposés, à travers lesquels le flux à épurer est amené à circuler. Le fond de chaque anneau est constitué de plaques radiales inclinées chacune autour d'un axe radial respectif, et entre lesquelles le flux gazeux s'écoule en effectuant un mouvement hélicoïdal ascendant. La matière pulvérulente adsorbante est introduite dans le gaz tourbillonnant au-dessus de l'anneau supérieur et forme, avec le flux gazeux, une sorte de lit fluidisé tournant, dont la matière pulvérulente sort par débordement, puis est dirigée, si l'installation comporte au moins deux étages, vers l'anneau suivant immédiatement au-dessous, et ainsi de suite jusqu'au dernier anneau ou anneau inférieur, d'où la matière pulvérulente sort du réacteur par déversement dans un collecteur à écoulement axial central.

Une telle disposition crée une perte de charge importante, ainsi qu'une abrasion non négligeable des parois du réacteur par la matière pulvérulente adsorbante, et une attrition de cette dernière, ce qui est préjudiciable pour les raisons précitées, lorsque cette matière pulvérulente adsorbante est de l'alumine.

Par US 4 501 599 ou EP 0 117 338, on connaît une autre installation dans laquelle la matière pulvérulente adsorbante est injectée radialement dans le flux gazeux ascendant et annulaire, à partir d'un injecteur disposé axialement dans le réacteur. Cet injecteur radial multiple comprend un corps cylindrique ou biconique comportant une ouverture de base, par laquelle de la matière pulvérulente adsorbante, fraîche et recyclée, est introduite sous une certaine pression, déterminée par des moyens d'alimentation gravitaire consistant en un conduit vertical alimenté axialement par le haut, de sorte que la matière pulvérulente parvient à des ouvertures orientées radialement dans la partie supérieure de l'injecteur et permettant l'injection de la matière pulvérulente adsorbante dans le flux de gaz à épurer sous une pression supérieure à celle régnant dans le réacteur. L'avance de la matière pulvérulente, depuis les moyens d'alimentation gravitaire jusqu'à l'axe central de l'injecteur multiple, peut être assurée par des moyens de transport de cette matière pulvérulente en lit fluidisé.

Toutes les installations décrites dans les documents de brevet précités donnent de bons résultats, mais nécessitent en général d'injecter la matière pulvérulente avec une charge hydraulique suffisante par rapport au réacteur, ce qui conduit à une consommation d'énergie importante, d'autant plus que le système d'injection crée une perte de charge importante dans le réacteur compte tenu du volume qu'il occupe dans ce dernier.

En outre, ces installations sont essentiellement adaptées à des réacteurs de taille limitée, cylindriques de section circulaire ou rectangulaire, et, dans ce dernier cas, avec un rapport faible (inférieur à 4) de la longueur à la largeur de la section transversale.

Par ailleurs, dans ces différentes installations, la mise en oeuvre satisfaisante du procédé de traitement nécessite des vitesses importantes (pouvant atteindre de 30 à 35 m/s au col d'un Venturi) du flux gazeux ascendant pour empêcher la sédimentation à contre-courant de la matière pulvérulente. En effet, les systèmes utilisés pour injecter cette matière créent des agglomérats assez cohérents, qui réagissent comme des particules uniques ayant les dimensions de ces agglomérats, et ont de ce fait des vitesses de chute, dans le flux ascendant, beaucoup plus importantes que celles des particules initiales de la matière pulvérulente utilisée.

Le document JP 01 117132 A décrit un dispositif d'alimentation et distribution d'une matière pulvérulente dans un flux gazeux ascendant dans un réacteur vertical de mise en contact de ladite matière pulvérulente avec ledit flux gazeux, comprenant des moyens de répartition de ladite matière pulvérulente dans ledit flux gazeux qui sont alimentés par des moyens d'alimentation gravitaire comprenant des répartiteurs gravitaires, fixés en positions inclinées avec une pente inférieure à 90 ° sur la direction horizontale et des moyens de transport de ladite matière pulvérulente en lit fluidisé, lesdits moyens d'alimentation gravitaire (21) se trouvant entièrement à l'extérieure du réacteur.

Le problème à la base de l'invention est de remédier aux inconvénients précités des réalisations connues, et de proposer un dispositif du type présenté ci-dessus assurant une meilleure distribution et répartition des particules de matière pulvérulente, en particulier réactive ou adsorbante, dans sensiblement toute la section transversale du réacteur, en améliorant les contacts entre les particules de matière pulvérulente et le flux gazeux, ainsi qu'en augmentant le temps de contact, afin d'améliorer l'efficacité de captation, en particulier des éléments polluants, gazeux ou solides, dans les gaz et/ou d'éléments à récupérer en vue de leur valorisation par un recyclage.

Un autre but de l'invention est de proposer un dispositif d'alimentation et distribution du type présenté ci-dessus, apte à maintenir l'efficacité de captation dans des réacteurs de grandes dimensions, et, d'une manière générale, à mieux satisfaire aux diverses exigences de la pratique que les dispositifs analogues connus.

Un autre but encore de l'invention est de proposer un tel dispositif d'alimentation et. distribution qui permet de limiter l'abrasion de la paroi interne du réacteur par la matière pulvérulente, ainsi que limiter l'attrition des particules de matière pulvérulente, pour éviter les inconvénients précités lors de l'utilisation d'alumine par recyclage dans un traitement industriel comme l'électrolyse de l'aluminium, et cela par le fait que le dispositif d'alimentation et distribution selon l'invention assure une excellente répartition de la matière pulvérulente dans un flux gazeux ascendant dont la vitesse est réduite par rapport à celle des installations de l'état de la technique.

Encore un autre but de l'invention est de proposer un dispositif d'alimentation et distribution du type précité, permettant de réduire la perte de charge dans le flux gazeux dans le réacteur, et donc l'énergie nécessaire au traitement des gaz, en limitant la vitesse des particules de matière pulvérulente au débouché dans le flux gazeux, et préférablement en limitant la vitesse ascensionnelle des gaz dans le réacteur, grâce à la mise en oeuvre uniquement des forces de gravité sollicitant les particules de matière pulvérulente à l'occasion d'une chute de hauteur limitée.

Un autre but encore est de proposer un dispositif du type précité permettant d'éviter la formation d'agrégats de particules de matière pulvérulente avant leur alimentation et leur distribution dans le flux gazeux.

Dans l'application particulière à l'épuration des gaz résultant de la production d'aluminium par électrolyse, ou de la cuisson d'anodes pour l'électrolyse de l'aluminium, l'invention a également pour but de proposer un dispositif du type présenté ci-dessus permettant d'améliorer la captation des composés fluorés, gazeux ou solides, dans les gaz provenant des séries de cuves d'électrolyse ou des fours de cuisson, par une meilleure distribution, répartition et pénétration de particules d'alumine pulvérulente dans le flux gazeux, l'alumine pulvérulente intervenant comme adsorbant et réactif chimique.

L'invention a donc pour but de proposer un dispositif d'alimentation et distribution permettant d'assurer une bonne répartition de la matière pulvérulente, en particulier adsorbante, dans tout le flux gazeux, tout en limitant la concentration de cette matière pulvérulente dans les zones proches des parois du réacteur. En effet, on sait que dans un réacteur traitant par adsorption des flux gazeux pollués, plus le débit gazeux à traiter est important, plus la section transversale de ces réacteurs doit être augmentée, et il devient de plus en plus difficile de répartir la matière pulvérulente adsorbante uniformément, et notamment vers le centre de la section du réacteur avec des moyens d'alimentation répartis sur tout le périmètre du réacteur. Or, la solution qui consiste à utiliser des injecteurs sous une pression supérieure à celle de la chambre interne du réacteur, et s'étendant jusque vers le centre du réacteur, a pour inconvénient majeur de nécessiter une plus grande puissance et un circuit d'alimentation en charge.

A l'effet de remédier à ces inconvénients et de satisfaire aux buts présentés ci-dessus, l'invention propose un dispositif d'alimentation et distribution de matière pulvérulente dans un flux gazeux ascendant, du type présenté ci-dessus et comprenant des moyens de répartition de la matière pulvérulente dans le flux gazeux qui sont alimentés par des moyens d'alimentation gravitaire et des moyens de transport de la matière pulvérulente en lit fluidisé, et se **caractérise en ce que** lesdits moyens de transport de ladite matière pulvérulente en lit fluidisé comprennent au moins une aéroglissière, sensiblement horizontale, externe au réacteur et directement adjacente à la paroi latérale du réacteur au moins au niveau de plusieurs ouvertures d'alimentation du réacteur en matière pulvérulente, laquelle se déverse de ladite aéroglissière dans le réacteur par lesdites ouvertures d'alimentation ménagées latéralement dans des parois de l'aéroglissière et du réacteur, et lesdits moyens d'alimentation gravitaire sont des répartiteurs gravitaires, agencés en goulottes fixées dans le réacteur en positions inclinées avec une pente inférieure à 90° sur la direction horizontale, et dont chacun présente une extrémité, en position supérieure et (radiale) externe, dans laquelle débouche l'une respectivement desdites ouvertures d'alimentation dans la paroi latérale du réacteur, de sorte que toute la matière pulvérulente s'écoulant par ladite ouverture d'alimentation est collectée dans ladite extrémité supérieure du répartiteur gravitaire incliné, et s'écoule dans ce dernier vers son extrémité inférieure, en position (radiale) interne par rapport à son extrémité supérieure, et par laquelle de la matière pulvérulente est injectée, avec la vitesse de chute acquise dans le répartiteur gravitaire, dans le flux gazeux ascendant, lesdites extrémités inférieures des répartiteurs gravitaires étant réparties dans la section transversale horizontale du réacteur.

Ainsi, les particules de matière pulvérulente introduites dans le flux gazeux au niveau de l'extrémité inférieure de chaque répartiteur gravitaire sont reprises par le flux gazeux ascendant et réparties de manière sensiblement homogène, dans une zone d'influence du répartiteur gravitaire, par le flux gazeux ascendant dont la vitesse peut être notablement inférieure à ce qu'elle est dans les réalisations de l'état de la technique. En outre, la matière pulvérulente, bien canalisée dans les parties d'extrémité supérieure des répartiteurs gravitaires, n'est pas emportée par le flux gazeux ascendant, de sorte que la paroi interne du réacteur est protégée contre l'abrasion, et la vitesse de déplacement limitée de la matière pulvérulente dans les répartiteurs gravitaires, à raison de la hauteur de chute limitée, limite l'attrition des particules de cette matière, ce qui est particulièrement avantageux lorsque cette matière pulvérulente est de l'alumine.

Comme connu, au moins une aéroglissière, mais de préférence chacune d'elles, est agencée sensiblement en caisson allongé comprenant, sur sa base sensiblement horizontale, et entre deux parois latérales, un collecteur de répartition d'air au-dessus duquel s'étend un fond poreux, séparant le collecteur d'une gouttière sensiblement horizontale alimentée en matière pulvérulente, le fond poreux permettant un passage réparti et sensiblement régulier d'air du collecteur dans la gouttière assurant la fluidisation et le transport de ladite matière pulvérulente en lit fluidisé.

Avantageusement, de plus, compte tenu de la grande finesse de la matière pulvérulente pouvant être utilisée, et pour éliminer les pertes, la gouttière de fluidisation de l'aéroglissière est fermée vers l'extérieur, et sa paroi latérale interne, du côté du réacteur, éventuellement commune avec une paroi du réacteur lorsque cette dernière est plane, présente des fentes également ménagées dans la paroi du réacteur, et situées au-dessus des ouvertures d'alimentation pour permettre à l'air de fluidisation de dégazer vers l'intérieur du réacteur sans passer par les ouvertures d'alimentation, le nombre desdites fentes de dégazage étant, de préférence, au moins égal à celui des ouvertures d'alimentation. Ces fentes de dégazage, largement dimensionnées, permettent le dégazage de l'air de fluidisation vers l'intérieur du réacteur sans perturber l'équilibrage aéraulique, dès lors que ces fentes de dégazage sont suffisamment grandes pour ne pas créer de survitesse importante le long de la paroi interne du réacteur, ce dégazage permettant, malgré tout; de protéger cette paroi interne de l'abrasion par la matière pulvérulente.

Avantageusement, de plus, chaque ouverture d'alimentation du réacteur est conformée en ouverture autorégulatrice du débit de la matière pulvérulente passant à travers elle pour se déverser dans le répartiteur gravitaire correspondant, ladite ouverture autorégulatrice comportant une partie inférieure de forme sensiblement ronde ou oblongue, prolongée vers le haut par une parte supérieure en forme de fente sensiblement verticale de largeur inférieure à la largeur de la partie inférieure, et est, de préférence, ménagée dans une plaque amovible rapportée sur une fenêtre correspondante dans l'une au moins des parois du réacteur et de l'aéroglissière, et sur laquelle plaque le répartiteur gravitaire est de préférence fixé. De préférence, ces ouvertures autorégulatrices sont au même niveau horizontal, en particulier au niveau de leur partie inférieure de forme sensiblement ronde ou oblongue, pour garantir une homogénéité de débit d'une ouverture autorégulatrice à l'autre.

Pour certains réacteurs de section transversale rectangulaire ou cylindriques, il peut être avantageux qu'au moins une plaque amovible, mais de préférence chacune d'elles, habillant une fenêtre de l'une au moins des parois du réacteur et de l'aéroglissière, présente deux ouvertures autorégulatrices voisines, de mêmes formes et dimensions, débouchant chacune dans l'un respectivement de deux répartiteurs gravitaires, de préférence supportés par la plaque, symétriques l'un de l'autre par rapport à un plan vertical, perpendiculaire à la paroi du réacteur et médian entre les deux ouvertures autorégulatrices, les deux répartiteurs gravitaires étant également inclinés sur ledit plan vertical en s'écartant l'un de l'autre vers l'intérieur du réacteur d'un angle compris de préférence entre environ 40° et environ 90°, en projection dans un plan horizontal.

Ainsi, la position des répartiteurs gravitaires peut être réglée par le positionnement de la plaque par rapport à la fenêtre correspondante de la paroi du réacteur, et l'écartement entre les deux répartiteurs d'une même plaque peut être ajusté au type de réacteur et aux conditions environnementales.

Concernant les répartiteurs gravitaires, l'un au moins d'entre eux, mais de préférence chacun d'eux, est agencé en goulotte restant toujours ouverte vers le haut, et dont la profondeur, entre son fond et le bord supérieur de ses deux flancs, est, au niveau de son extrémité supérieure, au moins égale à la hauteur de l'ouverture d'alimentation correspondante, la forme du fond et des flancs de la goulotte ainsi que l'écartement entre lesdits flancs étant tels que la projection horizontale de l'extrémité supérieure de la goulotte sur la paroi du réacteur, au niveau de l'ouverture d'alimentation correspondante, enveloppe ladite ouverture d'alimentation.

D'autres caractéristiques avantageuses des répartiteurs gravitaires sont les suivantes :
- la goulotte de chaque répartiteur gravitaire présente, en section transversale, une forme générale en "U" ou en "V", avec un fond plat ou bombé ou en "V", se raccordant à des flancs bombés ou rectilignes et sensiblement verticaux ou inclinés ;
- le fond et/ou les bords supérieurs des flancs de la goulotte est/sont rectiligne(s), en ligne brisée, bombée(s) en forme de parabole, en forme de "S", avec une pente moyenne entre les extrémités supérieure et inférieure dont l'angle sur l'horizontale est au moins égal à l'angle de glissement de la matière pulvérulente, et au maximum de 80°, et de préférence compris entre environ 40° et environ 60° ;

- la hauteur des flancs de la goulotte diminue linéairement de l'extrémité supérieure, au niveau de la paroi du réacteur, à l'extrémité inférieure de la goulotte ;
- dans sa partie d'extrémité inférieure, la goulotte se limite à son fond, de préférence de forme recourbée à concavité dirigée vers le haut, ou le fond s'étend entre des flancs de hauteur limitée inférieure à la hauteur des flancs en dehors de la partie d'extrémité inférieure de la goulotte ;
- des ouvertures sont ménagées dans le fond et/ou les flancs de la goulotte, de sorte à permettre l'enlèvement par le flux gazeux ascendant d'une partie de la matière pulvérulente s'écoulant dans la goulotte ; et
- les répartiteurs gravitaires s'étendent dans des plans sensiblement verticaux et perpendiculaires à la paroi du réacteur ou dans des plans verticaux inclinés sur des plans perpendiculaires à la paroi du réacteur.

Dans le cas particulier d'un réacteur cylindrique de section transversale sensiblement circulaire, il est avantageux qu'au moins une aéroglissière, et de préférence chacune d'elles, comprenne au moins deux tronçons rectilignes formant, en succession, une partie de polygone et chacun tangent extérieurement à la paroi latérale du réacteur, au niveau d'une ouverture d'alimentation respective du réacteur.

Par contre, dans le cas particulier d'un réacteur de section transversale horizontale quadrangulaire, et de préférence rectangulaire allongée, le dispositif peut comprendre avantageusement au moins une aéroglissière s'étendant tout le long de l'un au moins des côtés, de préférence un grand côté, de la section transversale et alimentant des ouvertures d'alimentation et des répartiteurs gravitaires sensiblement régulièrement espacés le long dudit côté de la section transversale du réacteur, l'espacement régulier ou pas des répartiteurs gravitaires pouvant correspondre sensiblement à la largeur de leur zone d'influence dans le réacteur.

Cependant, si notamment la largeur du réacteur de section rectangulaire le justifie, le dispositif peut comprendre au moins deux aéroglissières s'étendant chacune le long de l'un respectivement des deux grands côtés opposés de la section transversale rectangulaire du réacteur, les deux aéroglissières ayant de préférence une alimentation commune par leur extrémité située sur un même petit côté de la section transversale.

Dans les deux cas, que le réacteur soit équipé d'une seule aéroglissière le long d'un grand côté de sa section, ou de deux aéroglissières sur les deux grands côtés opposés, il est possible que les répartiteurs gravitaires soient identiques les uns aux autres avec leur extrémité inférieure sensiblement alignée sur un axe médian de la section transversale du réacteur, de préférence l'axe médian longitudinal de ladite section transversale.

Mais il est également possible que les longueurs des répartiteurs gravitaires soient adaptées de sorte que leurs extrémités inférieures soient disposées alternativement en quinconce par rapport à un axe médian de la section transversale, de préférence l'axe médian longitudinal de ladite section.

L'invention a également pour objet un réacteur sensiblement vertical de mise en contact d'une matière pulvérulente avec un flux gazeux ascendant dans le réacteur, lequel est en particulier un réacteur d'épuration d'au moins un effluent polluant du flux gazeux ascendant, provenant en particulier de cuves d'électrolyse d'aluminium ou de fours de cuisson d'anodes pour l'électrolyse d'aluminium, et dans lequel réacteur est introduite et distribuée une matière pulvérulente en tant qu'agent de neutralisation chimique et/ou physique desdits effluents polluants, notamment de l'alumine, fraîche et/ou recyclée, ou de la poudre de coke, et le réacteur de l'invention se **caractérise en ce qu**'il est équipé d'un dispositif d'alimentation et distribution de matière pulvérulente tel que présenté ci-dessus, de sorte à neutraliser par adsorption ou par réaction chimique notamment, des éléments fluorés, notamment HF, des composés gazeux fluorés, des goudrons, brais et autres éléments organiques tels que des hydrocarbures aromatiques polycycliques.

D'autres caractéristiques et avantages de l'invention ressortiront de la description donnée ci-dessous, à titre non limitatif, d'exemples de réalisation décrits en référence aux dessins annexés sur lesquels :
- la figure 1 représente, en coupe transversale horizontale, un réacteur d'épuration de section transversale rectangulaire allongée, équipé d'un premier exemple de dispositif d'alimentation et distribution selon l'invention,
- la figure 2 représente une vue partielle en coupe verticale du réacteur et du dispositif de la figure 1, au niveau d'une ouverture d'alimentation et d'un répartiteur gravitaire du dispositif,
- la figure 3 est une vue schématique partielle représentant, en projection horizontale sur la paroi interne du réacteur, l'extrémité supérieure d'un répartiteur gravitaire enveloppant une ouverture d'alimentation agencée en ouverture auto-régulatrice,
- la figure 4 est une vue analogue à la figure 3 pour un agencement avec deux ouvertures autorégulatrices voisines,
- la figure 5 représente schématiquement, en plan, la disposition des deux répartiteurs gravitaires associés aux deux ouvertures autorégulatrices de la figure 4, dans une variante du réacteur selon la figure 1,
- la figure 6 représente schématiquement, en élévation latérale, trois formes différentes de répartiteur repérées en (a), (b) et (c), entre leurs extrémités supérieure A et inférieure B ;
- la figure 7 représente quatre formes différentes, représentées en (a), (b), (c) et (d), de la section transversale du fond des répartiteurs gravitaires,
- la figure 8 représente une vue analogue à la figure 1 d'une variante de réacteur de section transversale rectangulaire allongée, avec des répartiteurs gravitaires qui ont leurs extrémités inférieures positionnées en quinconce dans le réacteur,
- la figure 9 est une vue analogue aux figures 1 et 8 d'une autre variante de réacteur de section transversale rectangulaire, de plus grande largeur que ceux des figures 1 et 8, et dont- le dispositif d'alimentation et distribution comprend deux aéroglissières, et
- la figure 10 est une vue analogue aux figures 1, 8 et 9 d'une autre variante de réacteur, cylindrique de section transversale horizontale circulaire, équipée d'un dispositif d'alimentation et distribution dont l'aéroglissière est conformée en partie de polygone.

Dans ce qui suit, le réacteur et le dispositif d'alimentation et distribution associé sont respectivement un réacteur d'épuration d'un flux gazeux ascendant provenant de cuves d'électrolyse d'aluminium, et un dispositif de répartition d'alumine pulvérulente dans le réacteur, en tant que matière pulvérulente absorbante et réactive, pour la captation d'effluents polluants et/ou à recycler contenus dans le flux gazeux, notamment des composés fluorés.

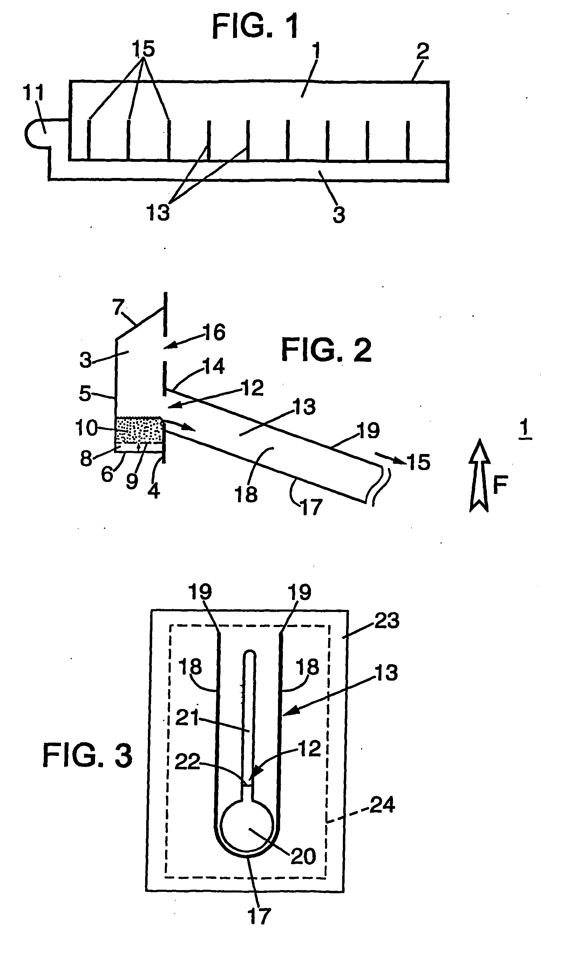

Sur la figure 1, le réacteur 1 vertical, de section transversale horizontale rectangulaire allongée, a sa paroi latérale 2 bordée, tout le long de l'un des deux grands côtés de sa section transversale, d'une aéroglissière 3 horizontale du dispositif d'alimentation et distribution du réacteur 1 en alumine pulvérulente.

Comme représenté sur la figure 2, l'aéroglissière 3, externe au réacteur 1, mais pouvant être interne à un filtre (non représenté) associé au réacteur 1, a une paroi latérale interne (du côté du réacteur 1) qui est une paroi commune 4 avec le réacteur 1, ce qui est rendu possible du fait que l'aéroglissière 3 s'étend horizontalement contre une grande face latérale verticale et plane du réacteur 1. Vers l'extérieur, l'aéroglissière 3 est délimitée par une paroi latérale externe 5 réunie à la paroi commune ou paroi interne 4, d'une part, par un fond 6 horizontal, et, d'autre part, par un toit 7 qui, avec la paroi externe 5, ferme l'aéroglissière 3 vers l'extérieur, afin d'éviter les pertes d'alumine pulvérulente de grande finesse utilisée. Un collecteur de répartition d'air 8 est délimité dans l'aéroglissière 3, au-dessus de son fond ou base 6, et en dessous d'un fond poreux 9 s'étendant entre les parois latérales 4 et 5 de l'aéroglissière 3, et permettant un passage réparti et sensiblement régulier d'air vers le dessus du fond poreux 9, afin d'assurer la fluidisation et le transport en lit fluidisé 10 de l'alumine pulvérulente alimentée dans la gouttière horizontale ainsi formée au-dessus du collecteur de répartition d'air 8, à partir d'un collecteur d'alimentation 11, à une extrémité de l'aéroglissière 3 qui se trouve préférentiellement sur un petit côté de la section rectangulaire du réacteur 1, comme visible sur la figure 1.

Ce collecteur 11 d'alimentation en alumine reçoit de l'alumine fraîche, provenant par exemple d'une trémie d'alimentation (non représentée) et/ou de l'alumine recyclée, préalablement déjà injectée et répartie dans le flux gazeux ascendant F (voir figure 2) dans le réacteur 1, et collectée à la sortie supérieure de ce dernier par un dispositif de filtration (également non représenté) recueillant l'alumine chargée de composés fluorés pour la recycler, en partie vers le lit fluidisé 10 de l'aéroglissière 3, et/ou en partie vers les cuves d'électrolyse d'aluminium.

La gouttière de transport du lit fluidisé 10 d'alumine, ainsi délimitée dans l'aéroglissière 3 en forme de caisson allongé, au-dessus du fond poreux 9, communique avec la chambre interne du réacteur 1 par des ouvertures 12 d'alimentation de cette chambre en alumine, ménagées au travers de la paroi commune 4.

Dans le cas où la paroi latérale interne de l'aéroglissière 3 est différente de la paroi latérale 2 du réacteur 1, mais appliquée contre cette dernière, au moins au niveau des ouvertures d'alimentation 12, il est clair que ces dernières sont ménagées latéralement dans les parois directement adjacentes et en contact l'une avec l'autre de l'aéroglissière 3 et du réacteur 1.

Chaque ouverture d'alimentation 12 débouche, au niveau de la face interne de la paroi 2 du réacteur 1, à l'intérieur de l'extrémité supérieure d'un répartiteur gravitaire 13, incliné vers le bas et vers l'intérieur du réacteur 1, comme représenté sur la figure 2, avec une pente d'inclinaison, par rapport à la direction horizontale, qui est inférieure à 90°. Ce répartiteur 13 est agencé en goulotte occupant une position fixe dans le réacteur 1, et canalisant le débit d'alumine pulvérulente qui se déverse du lit fluidisé 10 dans l'aéroglissière 3 vers le réacteur 1, par débordement par l'ouverture d'alimentation 12 débouchant dans l'extrémité supérieure 14 du répartiteur gravitaire 13.

Ainsi, toute l'alumine pulvérulente s'écoulant par une ouverture d'alimentation 12 est recueillie dans l'extrémité supérieure 14 d'un répartiteur gravitaire incliné 13 correspondant, et s'écoule dans ce dernier vers son extrémité inférieure 15 en position interne (vers le centre du réacteur 1) par rapport à son extrémité supérieure 14, en position externe et contre la face interne de la paroi latérale 2 du réacteur 1. L'alumine pulvérulente est ainsi injectée, avec la vitesse de chute acquise par l'effet de la gravité dans le répartiteur 13 incliné, dans le flux gazeux ascendant F dans le réacteur 1, ce flux gazeux F reprenant les particules d'alumine ainsi libérées du répartiteur 13 pour les répartir d'une manière sensiblement homogène dans le flux gazeux, à l'intérieur d'une zone d'influence de ce répartiteur 13. Afin que l'alumine pulvérulente soit répartie sensiblement sur toute la surface de la section transversale rectangulaire du réacteur 1, sans accumulation à proximité de sa paroi latérale 2, les extrémités inférieures 15 des répartiteurs 13 sont distribuées de manière appropriée dans cette section transversale horizontale du réacteur 1.

Sur la figure 1, les répartiteurs 13 sont inclinés dans des plans verticaux, perpendiculaires à la paroi commune 4 du réacteur 1 et de l'aéroglissière 3, et sont régulièrement espacés les uns des autres d'un pas qui correspond sensiblement à la largeur de la zone d'influence de chacun d'eux dans le réacteur 1, les extrémités inférieures 15 des répartiteurs 13, qui sont tous identiques dans cet exemple, étant sensiblement alignées sur l'axe médian longitudinal de la section transversale rectangulaire du réacteur 1.

En plus des ouvertures d'alimentation 12, la paroi commune 4 à l'aéroglissière 3 et au réacteur 1 présente des fentes de dégazage 16, qui sont situées au-dessus des ouvertures d'alimentation 12 afin de permettre à l'air de fluidisation de l'alumine en lit fluidisé 10 dans la gouttière de l'aéroglissière 3 de dégazer vers l'intérieur du réacteur 1, sans perturber l'équilibrage aéraulique, et sans passage de cet air de dégazage au niveau des ouvertures d'alimentation 12. Ces fentes de dégazage 16, dont le nombre est de préférence au moins égal à celui des ouvertures d'alimentation 12 du réacteur 1, sont largement dimensionnées, et suffisamment grandes pour ne pas créer de survitesse importante d'écoulement du flux gazeux ascendant le long de la face interne de la paroi 2 du réacteur 1, ce dégazage permettant néanmoins de protéger la face interne de la paroi 2 du réacteur 1 de l'abrasion par l'alumine pulvérulente, qui est répartie dans le flux gazeux par les répartiteurs 13, car, au niveau des extrémités supérieures 14 de ces derniers, la totalité du débit d'alumine pulvérulente s'écoulant dans le réacteur 1 est canalisée dans les répartiteurs gravitaires 13.

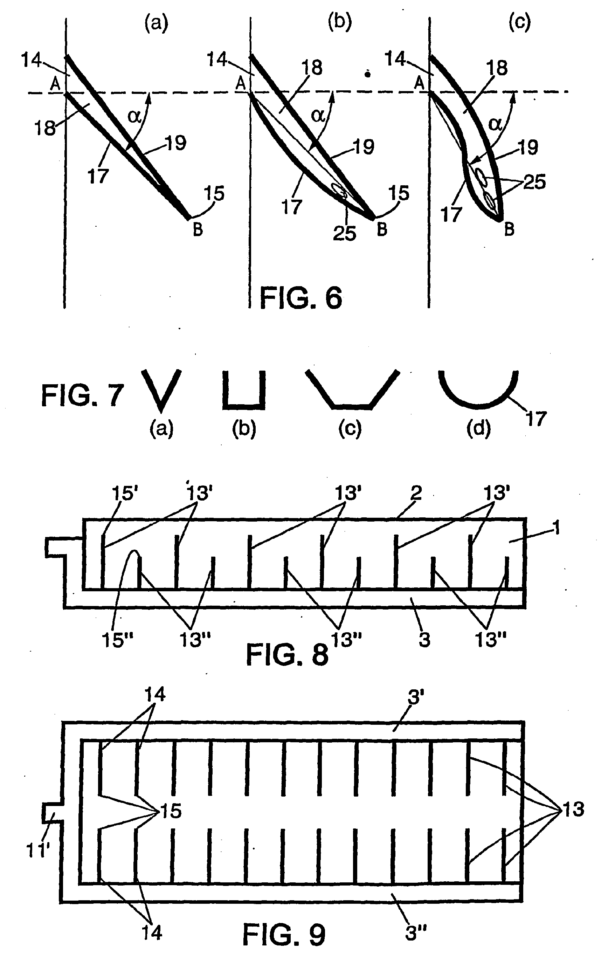

A cet effet, chaque répartiteur 13 est réalisé comme une goulotte qui, dans le réacteur 1, est ouverte vers le haut sur toute sa longueur, entre ses extrémités supérieure 14 et inférieure 15, et sa profondeur est au moins égale, et de préférence légèrement supérieure, au moins au niveau de son extrémité supérieure 14, à la hauteur de l'ouverture d'alimentation 12 correspondante. La profondeur de la goulotte est définie entre l'extrémité inférieure de son fond 17 et le bord supérieur 19 de ses deux flancs 18, qui, dans l'exemple de répartiteur 13 de la figure 3, sont deux flancs 18 plans, verticaux et parallèles, prolongeant vers le haut chacune respectivement des extrémités d'un fond 17 en forme de demi cylindre de section circulaire, les deux flancs 18 ayant la même hauteur sur toute leur longueur, entre les extrémités supérieure 14 et inférieure 15, mais pouvant également présenter une hauteur progressivement et linéairement décroissante de l'extrémité supérieure 14 à l'extrémité inférieure 15, comme schématiquement représenté sur la figure 6(a).

Dans tous les cas, la forme du fond 17 et des flancs 18 de la goulotte, ainsi que l'écartement entre les flancs 18 sont tels que la projection horizontale de l'extrémité supérieure 14 de la goulotte de chaque répartiteur 13 sur la paroi 4 du réacteur 1, au niveau de l'ouverture d'alimentation 12. correspondante, définit une forme qui enveloppe l'ouverture d'alimentation 12.

La forme générale de section transversale en U du répartiteur 13 de la figure 3, avec un fond 17 bombé à concavité tournée vers le haut et raccordé à des flancs 18 rectilignes et verticaux, se prête favorablement, au niveau de l'extrémité supérieure 14 du répartiteur 13, à l'enveloppement de l'ouverture d'alimentation 12 correspondante, lorsque cette dernière est conformée en ouverture autorégulatrice du débit d'alumine pulvérulente s'écoulant à travers elle du lit fluidisé 10 de l'aéroglissière 3 dans le répartiteur 13 correspondant.

En effet, dans cette conformation en ouverture autorégulatrice, l'ouverture 12 comporte une partie inférieure 20 qui est une ouverture circulaire, et qui se prolonge verticalement vers le haut par une partie supérieure en forme de fente 21 de largeur inférieure à la largeur ou diamètre de la partie inférieure 20. Une telle ouverture autorégulatrice fonctionne comme un ajutage, le niveau de l'alumine passant par l'ouverture 12 étant normalement dans la partie inférieure de la fente 21, comme indiqué par exemple en 22 sur la figure 3. Ainsi, pour une collecte complète de l'alumine s'écoulant par l'ouverture autorégulatrice 12 dans le répartiteur 13 correspondant, l'écartement entre les deux flancs 18 et le diamètre du fond semi cylindrique 17 sont légèrement supérieurs au diamètre de la partie inférieure 20 de cette ouverture 12, présentant sensiblement la forme d'un thermomètre à alcool ou mercure.

Pour chaque ouverture auto-régulatrice 12, le diamètre de sa partie inférieure circulaire 20 est, en règle générale, fonction du débit de matière pulvérulente devant traverser cette ouverture 12.

Afin de garantir une bonne homogénéité de débit d'une ouverture 12 à l'autre, ces ouvertures 12 sont positionnées de sorte que leurs extrémités inférieures sont à un même niveau horizontal.

Sensiblement le même résultat peut être obtenu avec des répartiteurs gravitaires 13 dont les goulottes présentent une section transversale de forme différente. Par exemple, comme montré par la figure 7, le fond de chaque goulotte peut être en V ou en U, en étant prolongé selon ces formes par les flancs 18, ou encore en forme d'auge à base plane prolongée par des côtés inclinés vers l'extérieur, eux-mêmes prolongés par des flancs plans verticaux ou inclinés, comme montré par les schémas (a), (b) et (c) de la figure 7, sur laquelle le schéma (d) correspond au fond semi cylindrique 17 de la figure 3. Ce fond peut être plan ou rectiligne et à pente constante selon un angle d'inclinaison α sur la direction horizontale, comme sur la figure 6(a), entre ses extrémités supérieure 14 en A et inférieure 15 en B.

En variante, comme montré sur la figure 6 (b), les bords supérieurs 19 des flancs de la goulotte de chaque répartiteur 13 sont rectilignes, mais le fond est bombé en direction longitudinale et présente la concavité vers le haut, la pente moyenne d'inclinaison, indiquée par l'angle α, étant dans ce cas déterminée par l'inclinaison sur l'horizontale de la droite reliant les points A et B au fond de la goulotte au niveau des extrémités respectivement supérieure 14 et inférieure 15. Sur la figure 6 (c), le fond 17 de la goulotte est recourbé en S, avec, du côté de son extrémité supérieure 14, une partie convexe vers le haut, et, dans sa moitié inférieure, une partie inférieure concave vers le haut, la pente α moyenne étant déterminée comme dans l'exemple de la figure 6 (b), et les bords supérieurs 19 des flancs 18 étant recourbés et convexes vers le haut.

D'autres formes du fond comme du bord supérieur des flancs de la goulotte des répartiteurs 13 sont possibles, par exemple en ligne brisée comme en Z ou en ligne courbe en parabole, auquel cas l'angle α est donné par la droite virtuelle partant du point de départ A à l'extrémité supérieure du répartiteur 13 et aboutissant au point B où se termine le fond du répartiteur 13.

Les répartiteurs 13 utilisant la seule force de la gravité, qui s'exerce sur les particules d'alumine qu'ils canalisent, pour les amener vers le centre des zones d'influence correspondantes, où ces particules sont reprises par le flux gazeux ascendant F et réparties dans ce dernier, il faut que chaque répartiteur 13 présente une certaine pente, pour permettre aux particules d'alumine de s'écouler et de prendre une certaine vitesse pendant leur déplacement vers la zone d'injection de ces particules, individuellement ou en agglomérat fragile, dans le flux gazeux ascendant F dans le réacteur 1. Pour cela, la pente d'angle α est au minimum égale à l'angle de glissement de la matière pulvérulente utilisée, en l'occurrence l'alumine, et au maximum de 80°, et de préférence α est entre environ 40° et environ 60°.

Afin de garantir un bon positionnement relatif de chaque ouverture d'alimentation 12 et du répartiteur gravitaire 13 correspondant, le répartiteur 13 est fixé, par son extrémité supérieure 14, contre une plaque 23, par exemple rectangulaire, dans laquelle est ménagée l'ouverture d'alimentation 12, et, pour garantir un bon positionnement de l'ensemble de l'ouverture 12 et du répartiteur 13 par rapport à l'aéroglissière 3 et au lit fluidisé 10 dans cette dernière, la plaque 23 est rapportée, comme schématisé sur la figure 3, sur une fenêtre 24 également rectangulaire, ménagée, au niveau où doit se situer une ouverture d'alimentation 12, dans la paroi 4 commune au réacteur 1 et à l'aéroglisseur 3, ou dans la paroi 2 du réacteur en l'absence de paroi commune. Les dimensions de la plaque 23 sont supérieures à celles de la fenêtre 24, de sorte qu'il existe un recouvrement du pourtour de la fenêtre 24 par la plaque 23, permettant une fixation amovible et réglable de la plaque 23 sur la paroi 4 ou 2.

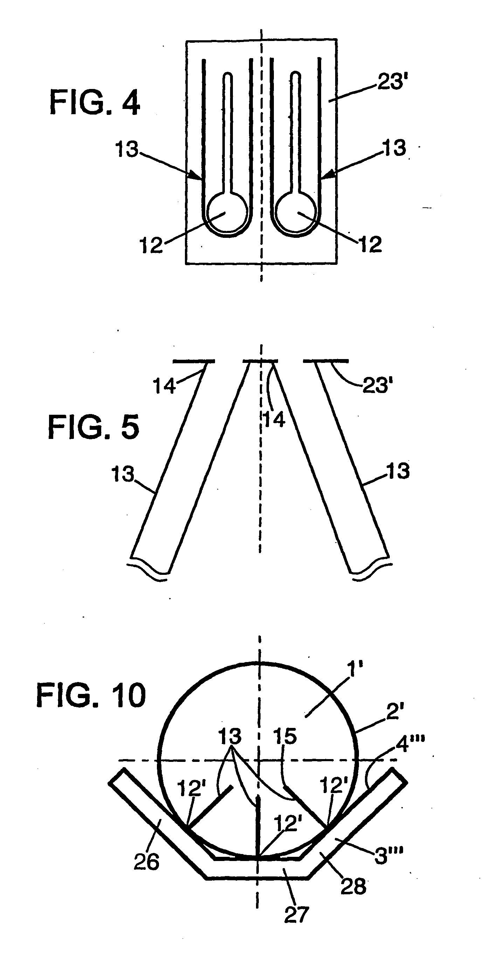

Pour certains réacteurs de section horizontale circulaire ou rectangulaire, au moins une plaque amovible 23' (voir figures 4 et 5), éventuellement chacune d'elles, obturant une fenêtre 24 dans la paroi 2 du réacteur 1 ou dans la paroi commune 4, présente deux ouvertures 12 autorégulatrices voisines et identiques (mêmes formes et dimensions), ainsi que deux répartiteurs 13, associés chacun à l'une respectivement des deux ouvertures 12, et fixés contre la plaque 23' par leur extrémité supérieure 14, et symétriques l'un de l'autre par rapport au plan vertical qui est perpendiculaire à la paroi 2 ou 4 et médian entre les deux ouvertures 12, avec une même inclinaison, dans un plan horizontal, sur ce plan vertical médian, ou sur la direction radiale locale, dans le cas d'un réacteur cylindrique, d'un angle compris de préférence entre environ 40° et environ 90°, suivant le type de réacteur et les conditions environnementales, de sorte que les deux répartiteurs 13 s'écartent l'un de l'autre vers l'intérieur du réacteur 1 tout en étant, bien entendu inclinés vers le bas de ce réacteur 1.

En variante des figures 1 à 3, les répartiteurs 13 peuvent s'écarter des plans verticaux perpendiculaires à la paroi 2 du réacteur 1 ou à la paroi commune 4, tous d'un même côté et, éventuellement, d'un même angle, par exemple de sensiblement 10°, en fonction de contraintes du procédé ou de conception.

Afin de ne pas créer de pertes de charges importantes dans le circuit aéraulique, les flancs 18 des répartiteurs 13 sont verticaux ou sensiblement verticaux, et la profondeur des répartiteurs 13, qui est toujours supérieure à la hauteur des ouvertures 12 au niveau de leur extrémité supérieure 14, a pour effet, en plus de la réception de toute la matière pulvérulente s'écoulant par l'ouverture 12, de faire en sorte que le flux de gaz F ascendant dans le réacteur 1 ne peut pas entraîner une partie de l'alumine absorbante le long de la paroi 2 du réacteur 1 ou de la paroi commune 4, ce qui peut entraîner une abrasion importante de cette paroi par l'alumine, et, simultanément, une dégradation de la granulométrie de cette alumine par attrition, phénomènes pouvant se produire dans les réacteurs de l'état de la technique.

Que les flancs 18 des répartiteurs 13 aient une hauteur constante ou qui diminue, éventuellement linéairement, ou en gradins ou échelons, jusqu'à l'extrémité inférieure 15, pour n'être plus que de l'ordre de 20 à 30 mm à cette extrémité 15, l'introduction de l'alumine absorbante dans le flux gazeux F peut alors être considéré comme ponctuelle, et le maximum de particules d'alumine a une trajectoire à contre-courant dans le flux gazeux ascendant F à traiter, augmentant ainsi l'efficacité de fixation d'éléments polluants, avant que ces particules ne soient entraînées par le flux gazeux F. La diffusion des particules d'alumine dans le flux gazeux F ascendant s'effectue alors naturellement.

Cependant, en fonction des caractéristiques physico-chimiques de la matière pulvérulente utilisée et des gaz, de la quantité de matière pulvérulente à alimenter ainsi que des caractéristiques dimensionnelles du réacteur 1, un agencement un peu plus complexe des répartiteurs gravitaires 13, en particulier au niveau de leur extrémité inférieure 15, peut être nécessaire dans le but d'élargir la zone d'influence de chaque répartiteur 13.

C'est pour cette raison que peuvent être utilisées les différentes formes précitées du fond 17, des flancs 18 ainsi que des bords supérieurs 19 des flancs des répartiteurs 13, comme décrit ci-dessus en référence aux figures 6 et 7.

Toutefois, selon une autre conception particulière, l'extrémité inférieure 15 du répartiteur 13 peut se limiter au fond 17 du répartiteur 13, de préférence de section semi cylindrique ou, de manière plus générale, d'une forme courbe à concavité dirigée vers le haut. Dans ce cas, l'absence de flanc de la goulotte de chaque répartiteur 13 au niveau de son extrémité inférieure 15 a pour effet d'augmenter la diffusion des particules d'alumine projetées dans le flux gazeux ascendant F, et d'agrandir la zone d'influence du répartiteur 13 considéré.

La présence d'un fond, de forme courbe à concavité dirigée vers le haut ou de section semi cylindrique, sur toute la longueur du répartiteur 13, a pour avantage d'éviter les accrochages d'alumine dans les angles, ce qui peut se produire avec un fond 17 ou une goulotte toute entière de répartiteur 13 selon la figure 7 (b).

D'une manière générale, le fait que la goulotte de chaque répartiteur 13 ne soit jamais refermée sur elle-même permet d'éviter des bouchages par formation d'agglomérat de matière pulvérulente, et facilite également l'entretien, et limite la maintenance.

Afin de modifier les conditions d'introduction de l'alumine pulvérulente dans le flux gazeux F ascendant, des ouvertures peuvent de plus être ménagées dans le fond 17 et/ou dans les flancs 18 des répartiteurs 13, pour permettre l'enlèvement d'une partie de l'alumine pulvérulente s'écoulant dans le répartiteur 13 par les gaz ascendants, en modifiant ainsi la forme et l'étendue de la zone d'influence du répartiteur 13 considéré. A titre d'exemple seulement, une ouverture 25 de forme ovale ou oblongue, ou deux ouvertures 25 de même forme, ont été représentées en (b) et (c) sur la figure 6, chaque ouverture d'enlèvement de matière 25 étant représentée ménagée dans la partie d'un flanc 18 à proximité du fond 17 et à proximité de l'extrémité inférieure 15 du répartiteur 13 représenté.

Selon une variante du réacteur à section rectangulaire de la figure 1, la série de répartiteurs 13 alimentés par l'unique aéro glissière 3 pour un étage de traitement (alors que le réacteur 1 peut être équipé de plusieurs étages répartis à différents niveaux de hauteur, et chacun comprenant une aéro glissière telle que 3 et une série de répartiteurs tels que 13) est telle que tous les répartiteurs 13 ne sont pas identiques avec leurs points d'introduction principaux, à leur extrémité inférieure 15, alignés sur l'axe médian longitudinal de la section rectangulaire, mais, comme représenté sur la figure 8, les répartiteurs sont groupés en deux groupes de répartiteurs identiques les uns aux autres dans chaque groupe, et qui diffèrent au moins en longueur des répartiteurs de l'autre groupe. Ainsi, des répartiteurs plus longs 13' sont disposés en alternance avec des répartiteurs plus courts 13" de sorte que leurs extrémités inférieures 15' et 15" sont disposées alternativement en quinconce par rapport à l'axe médian longitudinal de la section transversale rectangulaire du réacteur 1. Cependant, comme dans l'exemple de la figure 1, tous les répartiteurs gravitaires 13' et 13" sont alimentés à partir d'une même aéro glissière 3 par des ouvertures d'alimentation 12 réalisées comme décrites précédemment. Eventuellement, les répartiteurs gravitaires 13' et 13" peuvent également différer les uns des autres par leurs extrémités inférieures 15' et 15", afin d'homogénéiser sensiblement leurs zones d'influence respectives malgré leurs inclinaisons sur l'horizontale différentes, si leurs extrémités inférieures 15' et 15" se trouvent sensiblement dans un même plan horizontal.

Si les contrainte environnementales de l'installation, et en particulier le débit de flux gazeux F ascendant à traiter, obligent le concepteur à réaliser un réacteur 1 de section transversale horizontale rectangulaire bien plus importante, la série de répartiteurs 13 ou 13' et 13" des exemples des figures 1 et 8, alimentés par une unique aéro glissière 3 tout le long de l'un des grands côtés de la section rectangulaire du réacteur, peut être doublée par une autre série, parallèle à la première, mais alimentée et en saillie à partir de la grande paroi opposée du réacteur. Dans une telle disposition, comme représenté sur la figure 9, le réacteur comporte, à chaque étage, deux aéro glissières d'alimentation horizontales 3' et 3", chacune réalisée comme l'aéro glissière 3 précédemment décrite, et de préférence reliée l'une à l'autre au milieu d'un petit côté de la section transversale rectangulaire par une alimentation commune 11'. Donc, chacune des aéro glissière 3' et 3" s'étend le long de l'un respectivement des deux grands côtés opposés de la section transversale rectangulaire du réacteur, et dans l'exemple représenté sur la figure 9, on suppose que tous les répartiteurs gravitaires, alimentés par l'une ou l'autre des aéro glissière 3' et 3", sont identiques au répartiteur gravitaire 13 précédemment décrit.

Dans cette disposition, les extrémités inférieures 15 des répartiteurs 13 se situent entre environ 15% et environ 40% de la largeur du réacteur, à partir de leur extrémité supérieure 14 et donc de la grande paroi correspondante du réacteur, et de préférence entre environ 20%et environ 30% de cette largeur.

Les dispositions des figures 1, 8 et 9 s'adaptent bien aux réacteurs ayant des sections transversales horizontales rectangulaires très allongées, qualifiées de « linéaires », pour lesquels la longueur de la section transversale au niveau de laquelle l'alumine pulvérulente est introduite est plusieurs fois supérieure à la largeur de cette même section, le rapport longueur sur largeur pouvant atteindre 12, et, dans la mesure du possible, étant un multiple de la largeur « d » de la zone d'influence d'un répartiteur 13, laquelle largeur peut varier en pratique de 200 à 800mm, mais est préférentiellement de 400 à 500mm. La longueur de la section transversale du réacteur peut atteindre 4000 mm pour une largeur de 200 à 120mm.

Mais les réacteurs selon l'invention ne sont pas limités, dans leur section horizontale, à une forme rectangulaire, et un réacteur cylindrique de section transversale circulaire, comme représenté sur la figure 10, peut également être équipé d'un dispositif d'alimentation et distribution d'alumine pulvérulente selon l'invention. Dans ce cas, au moins une aéro glissière 3"' comprend par exemple trois tronçons rectilignes 26, 27 et 28 réalisés chacun comme l'aéro glissière 3 de la figure 2 sauf que la paroi interne 4''' de l'aéro glissière 3''' n'est pas commune avec la paroi cylindrique 2' du réacteur 1', les tronçons rectilignes 26, 27 et 28 formant, en succession, une partie de polygone, par exemple la moitié d'un hexagone, et étant chacun tangent extérieurement à la paroi latérale 2' du réacteur 1', au niveau d'une ouverture d'alimentation respective 12' du réacteur 1'. Du fait que la paroi latérale 2' du réacteur l'est différente de la paroi interne 4"' de l'aéroglissière 3"', chaque ouverture d'alimentation 12' est en fait constituée par une ouverture d'alimentation ménagée dans la paroi intérieure 4''' de l'aéroglissière 3''', au niveau du point de tangence du tronçon 26, 27 ou 28 considéré, et par une ouverture d'alimentation en regard, ménagée dans la paroi 2' du réacteur 1'.
Comme précédemment, à chaque ouverture d'alimentation 12' correspond un répartiteur gravitàire tel que 13, s'étendant incliné vers le bas du réacteur 1' dans un plan vertical radial, et de préférence fixé par son extrémité supérieure telle que 14 à une plaque telle que 23 (voir figure 3), qui peut être cintrée, et dans laquelle est ménagée l'ouverture d'alimentation dans la paroi 2' du réacteur 1'. En variante, une seconde aéroglissière telle que 3"', également en forme de demi hexagone, peut être tangente en trois points, correspondant à autant d'ouvertures d'alimentation 12', de la moitié de la section circulaire du réacteur 1' qui n'est pas enveloppée par l'aéroglissière 3"' de la figure 10, c'est-à-dire de la moitié supérieure sur cette figure.

Dans toutes ces réalisations, les extrémités inférieures 15, 15' et 15" des répartiteurs 13, 13', 13" sont ouvertes afin que la matière pulvérulente pénètre dans le flux de gaz ascendant F avec la seule vitesse de chute acquise. Pour les particules les plus grossières de la matière pulvérulente, cela permet un déplacement à contre-courant, avant que la force de traînée s'exerçant sur ces particules inverse le sens de leur déplacement, ce qui augmente le temps de contact gaz-matière pulvérulente, et donc l'efficacité de fixation des éléments polluants du flux gazeux sur les particules de matière pulvérulente. Dans toutes les réalisations également, les répartiteurs gravitaires, démontables pour faciliter l'entretién, et en particulier démontables avec les plaques amovibles telles que 23 et 23', sont, par exemple, réalisés en métal, notamment en tôle pliée et éventuellement percée, ou en matériau composite moulé ou thermoformé.

Les répartiteurs gravitaires tels que 13, 13' ou 13" sont conçus de façon que leur point principal d'injection de matière pulvérulente, en général leur extrémité inférieure telle que 15, 15' ou 15" se situe entre environ 15% et environ 85% du diamètre du réacteur, ou de sa largeur, à partir de la paroi d'où partent les répartiteurs, c'est-à-dire à partir de leur extrémité supérieure telle que 14, 14' ou 14", et préférentiellement entre environ 30% et environ 70%.

La réalisation de dispositifs d'alimentation et distribution de matière pulvérulente dans des réacteurs, avec des répartiteurs gravitaires selon l'invention, permet d'introduire, dans les gaz à épurer, des particules de matière pulvérulente non agglomérées, mais au contraire dispersées dès l'aéroglissière telle que 3, 3" ou 3"'. De ce fait, seules les caractéristiques dimensionnelles et physiques propres des particules de matière pulvérulente interviennent dans la vitesse de chute atteinte à l'extrémité inférieure des répartiteurs gravitaires. Le risque de sédimentation forcée de la matière pulvérulente disparaît, ce qui permet d'adopter, au niveau du procédé d'adsorption ou de réaction chimique, des vitesses du flux gazeux ascendant F plus faibles que dans les réacteurs de l'état de la technique, et augmentant la durée du parcours à contre-courant des particules de matière pulvérulente.. Ces deux paramètres permettent d'améliorer le temps de contact entre la matière pulvérulente et les éléments polluants dans le flux gazeux.

Les dispositifs d'alimentation et de distribution selon l'invention sont utilisables dans différents types de réacteurs, dans lesquels une matière pulvérulente doit être mise en contact avec un flux gazeux, éventuellement chaud et empoussiéré, dans lequel les particules doivent être réparties avec une bonne homogénéité.
Dans une réalisation particulièrement avantageuse, le dispositif d'alimentation et distribution de l'invention est particulièrement adapté au traitement d'épuration en réacteur des gaz pollués provenant des séries de cuves d'électrolyse dans la production d'aluminium. Dans cette application, de l'alumine fine et pulvérulente, en tant que matière pulvérulente adsorbante, est introduite dans le réacteur pour capter les composés fluorés contenus dans les gaz chauds provenant de ces séries de cuves, avant que l'alumine chargée ne soit séparée de ces gaz épurés dans une installation de filtration (non représentée) qui est en aval du dispositif d'alimentation et distribution de l'invention. Puis, l'alumine sortant du ou des filtres est stockée, en lit fluidisé, avant réintroduction d'une partie de cette alumine dans le réacteur, tandis que le surplus est envoyé dans les cuves d'électrolyse et recyclé pour la fabrication de l'aluminium. Il est clair que de l'alumine fraîche et de l'alumine recyclée peuvent être introduites, séparément ou mélangés suivant les cas, dans le réacteur par des répartiteurs gravitaires tels que décrits ci-dessus.

## Revendications

1. Dispositif d'alimentation et distribution d'une matière pulvérulente dans un flux gazeux (F) ascendant, éventuellement chaud et empoussiéré, dans un réacteur (1) sensiblement vertical de mise en contact de ladite matière pulvérulente, notamment un agent de neutralisation chimique et/ou physique d'au moins un effluent à épurer dudit flux gazeux, avec ledit flux gazeux (F), comprenant des moyens de répartition de ladite matière pulvérulente dans ledit flux gazeux (F) qui sont alimentés par des moyens (13) d'alimentation gravitaire et des moyens de transport (3) de ladite matière pulvérulente en lit fluidisé (10), **caractérisé en ce que** lesdits moyens de transport de ladite matière pulvérulente en lit fluidisé (10) comprennent au moins une aéroglissière (3), sensiblement horizontale, externe au réacteur (1) et directement adjacente à la paroi latérale (2) du réacteur (1) au moins au niveau de plusieurs ouvertures (12) d'alimentation du réacteur (1) en matière pulvérulente, laquelle se déverse de ladite aéroglissière (3) dans le réacteur (1) par lesdites ouvertures (12) d'alimentation ménagées latéralement dans des parois (24) de l'aéroglissière (3) et du réacteur (1), et lesdits moyens d'alimentation gravitaire sont des répartiteurs (13) gravitaires, agencés en goulottes fixées dans le réacteur (1) en positions inclinées avec une pente inférieure à 90° sur la direction horizontale, et dont chacun présente une extrémité (14), en position supérieure et radiale externe, dans laquelle débouche l'une respectivement desdites ouvertures (12) d'alimentation dans la paroi latérale (2) du réacteur (1), de sorte que toute la matière pulvérulente s'écoulant par ladite ouverture d'alimentation (12) est collectée dans ladite extrémité supérieure (14) du répartiteur gravitaire (13) incliné, et s'écoule dans ce dernier vers son extrémité inférieure (15), en position radiale interne par rapport à son extrémité supérieure (14), et par laquelle de la matière pulvérulente est injectée, avec la vitesse de chute acquise dans le répartiteur gravitaire (13), dans le flux gazeux (F) ascendant, lesdites extrémités inférieures (15) des répartiteurs gravitaires (13) étant réparties dans la section transversale horizontale du réacteur (1).

2. Dispositif selon la revendication 1, **caractérisé en ce qu'**au moins une aéroglissière (3) est agencée sensiblement en caisson (4, 5, 6, 7) allongé comprenant, sur sa base (6) sensiblement horizontale, et entre deux parois latérales (4, 5), un collecteur (8) de répartition d'air au-dessus duquel s'étend un fond poreux (9), séparant le collecteur (8) d'une gouttière( 4, 5, 9) sensiblement horizontale alimentée en matière pulvérulente, le fond poreux (9) permettant un passage réparti et sensiblement régulier d'air du collecteur (8) dans la gouttière (4, 5, 9) assurant la fluidisation et le transport de ladite matière pulvérulente en lit fluidisé (10).

3. Dispositif selon la revendication 2, **caractérisé en ce que** la gouttière (4, 5, 9) de fluidisation de l'aéroglissière (3) est fermée vers l'extérieur (5, 7), et sa paroi latérale interne (4), du côté du réacteur (1), éventuellement commune avec une paroi (2) du réacteur (1) lorsque cette dernière est plane, présente des fentes (16) également ménagées dans la paroi (2) du réacteur (1), et situées au-dessus des ouvertures d'alimentation (12) pour permettre à l'air de fluidisation de dégazer vers l'intérieur du réacteur (1) sans passer par les ouvertures d'alimentation (12), le nombre desdites fentes de dégazage (16) étant de préférence au moins égal à
celui des ouvertures d'alimentation (12).

4. Dispositif selon l'une quelconque des revendications 1 à 3, **caractérisé en ce que** chaque ouverture (12) d'alimentation du réacteur (1) est conformée en ouverture autorégulatrice du débit de la matière pulvérulente passant à travers elle pour se déverser dans le répartiteur gravitaire (13) correspondant, ladite ouverture autorégulatrice (12) comportant une partie inférieure (20) de forme sensiblement ronde ou oblongue, prolongée vers le haut par une partie supérieure en forme de fente (21) sensiblement verticale de largeur inférieure à la largeur de la partie inférieure (20), et est de préférence ménagée dans une plaque amovible (23) rapportée sur une fenêtre (24) correspondante dans l'une au moins des parois (24) du réacteur (1) et de l'aéroglissière (3), et sur laquelle plaque (23) le répartiteur gravitaire (13) est de préférence fixé.

5. Dispositif selon la revendication 4, **caractérisé en ce qu'**au moins une plaque amovible (23') habillant une fenêtre (24) de l'une au moins des parois (2, 4) du réacteur (1) et de l'aéroglissière (3), présente deux ouvertures autorégulatrices (12) voisines, de mêmes formes et dimensions, débouchant chacune dans l'un respectivement de deux répartiteurs gravitaires (13), de préférence supportés par la plaque (23'), symétriques l'un de l'autre par rapport à un plan vertical, perpendiculaire à la paroi (2) du réacteur (1) et médian entre les deux ouvertures autorégulatrices (12), les deux répartiteurs gravitaires (13) étant également inclinés sur ledit plan vertical en s'écartant l'un de l'autre vers l'intérieur du réacteur (1) d'un angle compris de préférence entre environ 40° et environ 90° en projection dans un plan horizontal.

6. Dispositif selon l'une quelconque des revendications 1 à 5, **caractérisé en ce que** chaque répartiteur gravitaire (13) est agencé en goulotte restant toujours ouverte vers le haut, et dont la profondeur, entre son fond (17) et le bord supérieur (19) de ses deux flancs (18), est, au niveau de son extrémité supérieure (14), au moins égale à la hauteur de l'ouverture d'alimentation (12) correspondante, la forme du fond (17) et des flancs (18) de la goulotte ainsi que l'écartement entre lesdits flancs (18) étant tels que la projection horizontale de l'extrémité supérieure (14) de la goulotte sur la paroi (2) du réacteur (1) au niveau de l'ouverture d'alimentation (12) correspondante enveloppe ladite ouverture d'alimentation (12).

7. Dispositif selon l'une quelconque des revendications 1 à 6, **caractérisé en ce que** la goulotte de chaque répartiteur gravitaire (13) présente, en section transversale, une forme générale en "U" ou en "V", avec un fond (17) plat ou bombé ou en "V", se raccordant à des flancs (18) bombés ou rectilignes et sensiblement verticaux ou inclinés.

8. Dispositif selon la revendication 7, **caractérisé en ce que** le fond (17) et/ou les bords supérieurs (19) des flancs (18) de la goulotte est/sont rectiligne(s), en ligne brisée, bombée(s) en forme de parabole, en forme de "S", avec une pente moyenne entre les extrémités supérieure (14) et inférieure (15) dont l'angle sur l'horizontal est au moins égal à l'angle de glissement de la matière pulvérulente, et au maximum de 80°, et de préférence compris entre environ 40° et environ 60°.

9. Dispositif selon l'une quelconque des revendications 7 et 8, **caractérisé en ce que** la hauteur des flancs (18) de la goulotte diminue linéairement de l'extrémité supérieure (14), au niveau de la paroi (2) du réacteur (1), à l'extrémité inférieure (15) de la goulotte.

10. Dispositif selon l'une quelconque des revendications 7 à 9, **caractérisé en ce que,** dans sa partie d'extrémité inférieure (15), la goulotte se limite à son fond (17), de préférence de forme recourbée à concavité dirigée vers le haut, ou le fond s'étend entre les flancs de hauteur inférieure à la hauteur des flancs en dehors de la partie d'extrémité inférieure de la goulotte.

11. Dispositif selon l'une quelconque des revendications 7 à 10, **caractérisé en ce que** des ouvertures (25) sont ménagées dans le fond (17) et/ou les flancs (18) de la goulotte, de sorte à permettre l'enlèvement par le flux gazeux (F) ascendant d'une partie de la matière pulvérulente s'écoulant dans la goulotte.

12. Dispositif selon l'une quelconque des revendications 1 à 11, **caractérisé en ce que** les répartiteurs gravitaires (13) s'étendent dans des plans sensiblement verticaux et perpendiculaires à la paroi (2) du réacteur (1) ou dans des plans verticaux inclinés sur des plans perpendiculaires à la paroi (2) du réacteur (1).

13. Dispositif selon l'une quelconque des revendications 1 à 12, pour un réacteur cylindrique (1') de section transversale sensiblement circulaire, **caractérisé en ce que** au moins une aéroglissière (3"') comprend au moins deux tronçons rectilignes (26, 27, 28) formant, en succession, une partie de polygone et chacun tangent extérieurement à la paroi latérale (2') du réacteur (1'), au niveau d'une ouverture (12') d'alimentation respective du réacteur (1').

14. Dispositif selon l'une quelconque des revendications 1 à 12, pour un réacteur (1) de section transversale horizontale quadrangulaire, de préférence rectangulaire allongée, **caractérisé en ce qu'**il comprend au moins une aéroglissière (3) s'étendant tout le long de l'un au moins des côtés, de préférence un grand côté, de la section transversale et alimentant des ouvertures d'alimentation (12) et des répartiteurs gravitaires (13) sensiblement régulièrement espacés le long dudit côté de la section transversale du réacteur (1).

15. Dispositif selon la revendication 14, **caractérisé en ce qu'**il comprend au moins deux aéroglissières (3', 3") s'étendant chacune le long de l'un respectivement des deux grands côtés opposés de la section transversale rectangulaire du réacteur, les deux aéroglissières (3', 3") ayant de préférence une alimentation commune (11') par leur extrémité située sur un même petit côté de la section transversale.

16. Dispositif selon l'une quelconque des revendications 14 et 15, **caractérisé en ce que** les répartiteurs gravitaires (13) sont identiques les uns aux autres et ont leur extrémité inférieure (15) sensiblement alignée sur un axe médian de la section transversale du réacteur (1), de préférence l'axe médian longitudinal de ladite section transversale.

17. Dispositif selon l'une quelconque des
revendications 14 et 15, **caractérisé en ce que** les longueurs des répartiteurs gravitaires (13', 13") sont
adaptées de sorte que leurs extrémités inférieures (15', 15") soient disposées alternativement en quinconce par rapport à un axe médian de la section transversale, de préférence l'axe médian longitudinal de ladite section.

18. Réacteur d'épuration d'au moins un effluent polluant d'un flux gazeux (F) ascendant dans le réacteur (1, 1'), en particulier d'un flux gazeux provenant de cuves d'électrolyse d'aluminium.ou de fours de cuisson d'anodes pour l'électrolyse d'aluminium, et dans lequel réacteur (1, 11) est introduite et distribuée une matière pulvérulente en tant qu'agent de neutralisation chimique et/ou physique desdits effluents polluants, notamment de l'alumine, fraîche et/ou recyclée, ou de la poudre de coke, **caractérisé en ce que** le réacteur (1, 1') est équipé d'un dispositif d'alimentation et distribution de matière pulvérulente selon l'une quelconque des revendications 1 à 17, de sorte à neutraliser par adsorption ou par réaction chimique notamment, des éléments fluorés, notamment HF, des composés gazeux fluorés, des goudrons, brais et autres éléments organiques tels que des hydrocarbures aromatiques polycycliques.

## Claims

1. Device for feeding and distributing a powdery material in a gas upflow (F) possibly hot and dustladen, in a substantially vertical reactor (1) for contacting said powdery material, particularly an agent for the chemical and/or physical neutralization of at least one effluent to be stripped from said gas flow, with said gas flow (F), comprising means for distributing said powdery material in said gas flow (F) which are supplied by means (13) for gravity feeding and means (3) for transporting said powdery material in a fluidized bed (10), **characterized in that** said means for transporting said powdery material in a fluidized bed (10) comprises at least one air slide (3), substantially horizontal, outside the reactor (1) and directly adjacent to the side wall (2) of the reactor (1) at least at the level of several openings (12) for feeding the reactor (1) with powdery material, which drops from said air slide (3) into the reactor (1) via said feed openings (12) arranged laterally in walls (24) of the air slide (3) and of the reactor (1), and said gravity feed means are gravity distributors (13), arranged in chutes fixed in the reactor (1) in inclined positions with a slope of less than 90° to the horizontal, and each of which has one end (14), in the upper and radially external position, in which one of said feed openings (12) in the side wall (2) of the reactor (1) terminates respectively, so that all the powdery material flowing through said feed opening (12) is collected in said upper end (14) of the inclined gravity distributor (13), and flows in the latter towards its lower end (15), in a radially internal position with respect to its upper end (14), and through which the powdery material is injected, with the velocity of fall acquired in the gravity distributor (13), into the gas upflow (F), said lower ends (15) of the gravity distributors (13) being distributed in the horizontal cross section of the reactor (1).

2. Device according to Claim 1, **characterized in that** at least one air slide (3) is arranged substantially in an elongated chamber (4, 5, 6, 7) comprising, on its substantially horizontal base (6), and between two side walls (4, 5), an air distribution manifold (8) above which a porous bottom (9) extends, separating the manifold (8) from a substantially horizontal channel (4, 5, 9) supplied with powdery material, the porous bottom (9) permitting a distributed and substantially uniform passage of air from the manifold (8) into the channel (4, 5, 9) effecting the fluidization and the transport of said powdery material in a fluidized bed (10).

3. Device according to Claim 2, **characterized in that** the fluidization channel (4, 5, 9) of the air slide (3) is outwardly closed (5, 7), and its internal side wall (4), on the reactor (1) side, possibly common with a wall (2) of the reactor (1) when said reactor wall is plane, has slits (16) also arranged in the wall (2) of the reactor (1), and located above the feed openings (12) to permit the fluidization air to degasify towards the interior of the reactor (1) without passing through the feed openings (12), the number of said degassing slits (16) preferably being at least equal to the number of feed openings (12).

4. Device according to any one of Claims 1 to 3, **characterized in that** each feed opening (12) of the reactor (1) is conformed as a self-regulating opening of the flow of the powdery material passing through it to flow into the corresponding gravity distributor (13), said self-regulating opening (12) comprising a lower part (20) of substantially round or oblong shape, prolonged upwardly by an upper part in the shape of a substantially vertical slit (21), smaller in width than the width of the lower part (20), and is preferably arranged in a movable plate (23) added on to a corresponding window (24) in at least one of the walls (24) of the reactor (1) and of the air slide (3), and to which plate (23) the gravity distributor (13) is preferably fixed.

5. Device according to Claim 4, **characterized in that** at least one movable plate (23') covering a window (24) of at least one of the walls (2, 4) of the reactor (1) and of the air slide (3), has two neighbouring self-regulating openings (12) of the same shape and dimensions, each terminating respectively in one of two gravity distributors (13), preferably supported by the plate (23'), each symmetrical to the other about a vertical plane, perpendicular to the wall (2) of the reactor (1) and midway between the two self-regulating openings (12), the two gravity distributors (13) also being inclined to said vertical plane and separating from one another towards the interior of the reactor (1) by an angle preferably in a range of about 40° to about 90° in projection in a horizontal plane.

6. Device according to any one of Claims 1 to 5, **characterized in that** each gravity distributor (13) is arranged in a chute always remaining upwardly open, and of which the depth, between its bottom (17) and the upper edge (19) of its two sides (18), at the level of its upper end (14), is at least equal to the height of the corresponding feed opening (12), the shape of the bottom (17) and of the sides (18) of the channel and the spacing between said sides (18) being such that the horizontal projection of the upper end (14) of the chute on the wall (2) of the reactor (1) at the level of the corresponding feed opening (12), envelops said feed opening (12).

7. Device as claimed in any one of Claims 1 to 6, **characterized in that** the chute of each gravity distributor (13) has, in a cross section, a general "U" or "V" shape with a flat or convex or "V" shaped bottom (17), joined to convex or linear and substantially vertical or inclined sides (18).

8. Device according to Claim 7, **characterized in that** the bottom (17) and/or the upper edges (19) of the sides (18) of the chute is/are linear, in a broken line, convex in a parabola shape, "S" shaped, with an average slope between the upper (14) and lower (15) ends of which the angle to the horizontal is at least equal to the angle of repose of the powdery material, and a maximum of 80°, and preferably of between about 40° and about 60°.

9. Device according to either of Claims 7 and 8, **characterized in that** the height of the sides (18) of the chute decreases linearly from the upper end (14), at the level of the wall (2) of the reactor (1), to the lower end (15) of the chute.

10. Device according to any one of Claims 7 to 9, **characterized in that,** in its lower end part (15), the chute is limited to its bottom (17), preferably of a curved shape with upward concavity, or the bottom extends between the sides of lower limited height than the height of the sides outside the lower end part of the chute.

11. Device according to any one of Claims 7 to 10, **characterized in that** openings (25) are arranged in the bottom (17) and/or the sides (18) of the chute, so as to permit the removal by the gas upflow (F) of a part of the powdery material flowing in the chute.

12. Device according to any one of Claims 1 to 11, **characterized in that** the gravity distributors (13) extend in substantially vertical planes perpendicular to the wall (2) of the reactor (1) or in vertical planes inclined to planes perpendicular to the wall (2) of the reactor (1).

13. Device according to any one of Claims 1 to 12, for a cylindrical reactor (1') with substantially circular cross section, **characterized in that** at least one air slide (3"') comprises at least two linear sections (26, 27, 28) forming, in succession, a part of a polygon, and each externally tangent to the side wall (2') of the reactor (1'), at the level of a respective feed opening (12') of the reactor (1').

14. Device according to any one of Claims 1 to 12, for a reactor (1) of four-sided horizontal, and preferably elongated rectangular cross section, **characterized in that** it comprises at least one air slide (3) extending along the whole of at least one of the sides, preferably a long side, of the cross section, and supplying feed openings (12) and gravity distributors (13) substantially uniformly spaced along said side of the cross section of the reactor (1).

15. Device according to Claim 14, **characterized in that** it comprises at least two air slides (3',3") each extending along respectively one of the two long opposite sides of the rectangular cross section of the reactor, the two air slides (3', 3") preferably having a common feed (11') via their end located in a same short side of the cross section.

16. Device according to either of Claims 14 and 15, **characterized in that** the gravity distributors (13) are identical to one another and have their lower end (15) substantially aligned with a mid-axis of the cross section of the reactor (1), preferably the longitudinal mid-axis of said cross section.

17. Device according to either of Claims 14 and 15, **characterized in that** the lengths of the gravity distributors (13', 13") are adapted so that their lower ends (15', 15") are placed alternately in a staggered arrangement with respect to the mid-axis of the cross section, preferably the longitudinal mid-axis of the said section.

18. Reactor for stripping at least one pollutant effluent from a gas upflow (F) in the reactor (1, 1'), particularly from a gas flow issuing from aluminium electrolysis cells or furnaces for baking anodes for aluminium electrolysis, and in which reactor (1, 11) a powdery material is introduced and distributed as an agent for chemical and/or physical neutralization of said pollutant effluents, particularly fresh and/or recycled alumina, or coke powder, **characterized in that** the reactor (1, 1') is equipped with a device for feeding and distributing powdery material according to any one of Claims 1 to 17, so as to neutralize, by adsorption or by chemical reaction in particular, fluorinated elements, particularly HF, fluorinated gaseous compounds, tars, pitch and other organic elements such as polycyclic aromatic hydrocarbons.

## Patentansprüche

1. Vorrichtung zur Zuführung und Verteilung eines pulverartigen Stoffs in einem gasartigen aufsteigenden, möglicherweise warmen und staubigen Strom (F) in einem im Wesentlichen vertikalen Reaktor (1), um den pulverartigen Stoff, insbesondere ein chemisches und/ oder physikalisches Neutralisationsmittel für wenigstens einen zu klärenden Abstrom des gasartigen Stroms, mit dem gasartigen Strom (F) in Kontakt zu bringen, umfassend Mittel zur Verteilung des pulverartigen Stoffs in dem gasartigen Strom (F), die von Schwerkraft-Zufuhrmitteln (13) gespeist werden, und Mittel (3) zum Transport des pulverartigen Stoffs in einer Wirbelschicht (10),
**dadurch gekennzeichnet, dass** die Mittel zum Transport des pulverartigen Stoffs in einer Wirbelschicht (10) wenigstens eine Luftführung (3) umfassen, die im Wesentlichen horizontal außerhalb von dem Reaktor (1) und unmittelbar angrenzend an die Seitenwand (2) des Reaktors (1) wenigstens auf der Höhe von mehreren Öffnungen (12) des Reaktors (1) zur Zufuhr des pulverartigen Stoffs ist, der aus der Luftführung (3) durch die Zufuhröffnungen (12) in den Reaktor (1) strömt, die seitlich in Wänden (24) der Luftführung (3) und des Reaktors (1) vorgesehen sind, und wobei die Schwerkraft-Zufuhrmittel gravitäre Verteiler (13) sind, die in Kanälen angeordnet sind, die in dem Reaktor (1) an Positionen befestigt sind, welche mit einer Neigung kleiner als 90° zur horizontalen Richtung geneigt sind, und von denen jeder ein an oberer Position und radial außen angeordnetes Ende (14) aufweist, in das jeweils eine der Zufuhröffnungen (12) in der Seitenwand (2) des Reaktors (1) so mündet, dass der gesamte durch die Zufuhröffnung (12) strömende pulverartige Stoff in dem oberen Ende (14) des geneigten gravitären Verteilers (13) gesammelt wird und in letzterem auf dessen unteres Ende (15) zu strömt, das sich in radialer Innenposition in Bezug auf sein oberes Ende (14) befindet, und durch das pulverartiger Stoff mit der in dem gravitären Verteiler (13) gewonnenen Geschwindigkeit in den gasartigen aufsteigenden Strom (F) eingeführt wird, wobei die unteren Enden (15) der gravitären Verteiler (13) in dem horizontalen Querschnitt des Reaktors (1) verteilt sind.

2. Vorrichtung nach Anspruch 1, **dadurch gekennzeichnet, dass** wenigstens eine Luftführung (3) im Wesentlichen in Form eines länglichen Kastens (4, 5, 6, 7) angeordnet ist, der an seinem im Wesentlichen horizontalen Boden (6) sowie zwischen zwei Seitenwänden (4, 5) einen Luftverteilungskollektor (8) umfasst, oberhalb dessen sich ein poröser Boden (9) erstreckt, der den Kollektor (8) von einer im Wesentlichen horizontalen Rinne (4, 5, 9) trennt, die mit pulverartigem Stoff gespeist ist, wobei der poröse Boden (9) einen verteilten und im Wesentlichen regelmäßigen Durchgang von Luft von dem Kollektor (8) in die Rinne (4, 5, 9) ermöglicht, was die Fluidisierung und den Transport des pulverartigen Stoffs in der Wirbelschicht (10) sicherstellt.

3. Vorrichtung nach Anspruch 2, **dadurch gekennzeichnet, dass** die Fluidisierungsrinne (4, 5, 9) der Luftführung (3) nach außen (5, 7) abgeschlossen ist und ihre Innenseitenwand (4) auf der Seite des Reaktors (1), möglicherweise gemeinsam mit einer Wand (2) des Reaktors (1), wenn letztere eben ist, Spalte (16) aufweist, die auch in der Wand (2) des Reaktors (1) angeordnet sind und sich oberhalb der Zufuhröffnungen (12) befinden, um es der Fluidisierungsluft zu ermöglichen, zu dem Inneren des Reaktors (1) hin zu entgasen, ohne die Zufuhröffnungen (12) zu passieren, wobei die Anzahl der Entgasungsspalte (16) vorzugsweise wenigstens gleich der Anzahl der Zufuhröffnungen (12) ist.

4. Vorrichtung nach einem der Ansprüche 1 bis 3, **dadurch gekennzeichnet, dass** jede Zufuhröffnung (12) des Reaktors (1) einer selbstregulierenden Öffnung des Abgangs des pulverartigen Stoffs entspricht, der sie durchquert, um in den entsprechenden gravitären Verteiler (13) zu strömen, wobei die selbstregulierende Öffnung (12) einen unteren Abschnitt (20) von im Wesentlichen runder oder länglicher Form umfasst, der nach oben verlängert ist durch einen oberen Abschnitt in Form eines im Wesentlichen vertikalen Spalts (21) mit einer Breite, die kleiner als die Breite des unteren Abschnitts (20) ist, und die vorzugsweise in einer abnehmbaren Platte (23) angeordnet ist, die auf einem entsprechenden Fenster in wenigstens einer der Wände (24) des Reaktors (1) und der Luftführung (3) angeordnet ist, und auf welcher Platte (23) der gravitäre Verteiler (13) vorzugsweise befestigt ist.

5. Vorrichtung nach Anspruch 4, **dadurch gekennzeichnet, dass** wenigstens eine abnehmbare Platte (23'), die ein Fenster (24) der wenigstens einen der Wände (2, 4) des Reaktors (1) und der Luftführung (3) verkleidet, zwei benachbarte selbstregulierende Öffnungen (12) gleicher Formen und Dimensionen aufweist, wobei jede in jeweils einen der zwei gravitären Verteiler (13) mündet, die vorzugsweise von der Platte (23') gehalten sind und zueinander in Bezug auf eine vertikale Ebene symmetrisch sind und senkrecht zu der Wand (2) des Reaktors (1) mittig zwischen den beiden selbstregulierenden Öffnungen (12) angeordnet sind, wobei die beiden gravitären Verteiler (13) gleichfalls zu der vertikalen Ebene geneigt sind, indem sie sich zum Inneren des Reaktors (1) hin in einem Winkel voneinander entfernen, der bei Projektion in eine horizontale Ebene vorzugsweise zwischen etwa 40° und etwa 90° liegt.

6. Vorrichtung nach einem der Ansprüche 1 bis 5, **dadurch gekennzeichnet, dass** jeder gravitäre Verteiler (13) in einem Kanal angeordnet ist, der nach oben hin immer offen bleibt, und dessen Tiefe zwischen seinem Boden (17) und dem oberen Rand (19) seiner zwei Flanken (18) auf der Höhe seines oberen Endes (14) wenigstens genauso groß ist wie die Höhe der entsprechenden Zufuhröffnung (12), wobei die Form des Bodens (17) und der Flanken (18) des Kanals ebenso wie der Abstand zwischen den Flanken (18) so sind, dass die horizontale Projektion des oberen Endes (14) des Kanals auf die Wand (2) des Reaktors (1) auf der Höhe der entsprechenden Zufuhröffnung (12) die Zufuhröffnung (12) umhüllt.

7. Vorrichtung nach einem der Ansprüche 1 bis 6, **dadurch gekennzeichnet, dass** der Kanal jedes gravitären Verteilers (13) im Querschnitt eine im Wesentlichen U- oder V-Form, mit einem ebenen oder gewölbten oder V-förmigen Boden (17), aufweist, der sich an Flanken (18) anschließt, die gewölbt oder geradlinig und im Wesentlichen vertikal oder geneigt sind.

8. Vorrichtung nach Anspruch 7, **dadurch gekennzeichnet, dass** der Boden (17) und/ oder die oberen Ränder (19) der Flanken (18) des Kanals geradlinig, abschnittsweise linear, in Form einer Parabel gewölbt, in Form eines "S" gewölbt sind/ ist, mit einer mittleren Steigung zwischen dem oberen Ende (14) und dem unteren Ende (15), deren Winkel zur Horizontalen wenigstens genauso groß ist wie der Gleitwinkel des pulverartigen Stoffs und maximal 80° ist und vorzugsweise zwischen etwa 40° und etwa 60° liegt.

9. Vorrichtung nach einem der Ansprüche 7 und 8, **dadurch gekennzeichnet, dass** die Höhe der Flanken (18) des Kanals linear von dem oberen Ende (14) auf der Höhe der Wand (2) des Reaktors (1) zu dem unteren Ende (15) des Kanals abnimmt.

10. Vorrichtung nach einem der Ansprüche 7 bis 9, **dadurch gekennzeichnet, dass** der Kanal sich in seinem unteren Endabschnitt (15) auf seinen Boden (17) beschränkt, vorzugsweise in gekrümmter Form mit einer nach oben gerichteten Konkavität, oder sich der Boden zwischen den Flanken von einer Höhe, die kleiner als die Höhe der Flanken ist, außerhalb von dem unteren Endabschnitt des Kanals erstreckt.

11. Vorrichtung nach einem der Ansprüche 7 bis 10, **dadurch gekennzeichnet, dass** Öffnungen (25) in dem Boden (17) und/ oder den Flanken (18) des Kanals so angeordnet sind, dass sie das Abführen eines Teils des pulverartigen Stoffs, der in den Kanal strömt, durch den gasartigen aufsteigenden Strom (F) ermöglichen.

12. Vorrichtung nach einem der Ansprüche 1 bis 11, **dadurch gekennzeichnet, dass** sich die gravitären Verteiler (13) in Ebenen erstrecken, die im Wesentlichen vertikal und senkrecht zu der Wand (2) des Reaktors (1) sind, oder sich in vertikalen Ebenen erstrecken, die zu den Ebenen, welche senkrecht zu der Wand (2) des Reaktors (1) sind, geneigt sind.

13. Vorrichtung nach einem der Ansprüche 1 bis 12 für einen zylindrischen Reaktor (1'), der einen im Wesentlichen kreisförmigen Querschnitt aufweist, **dadurch gekennzeichnet, dass** wenigstens eine Luftführung (3"') wenigstens zwei geradlinige Abschnitte (26, 27, 28) umfasst, die aufeinander folgend einen Polygon-Abschnitt bilden, und wobei jeder die Seitenwand (2') des Reaktors (1') auf der Höhe einer jeweiligen Zufuhröffnung (12') des Reaktors (1') außen berührt.

14. Vorrichtung nach einem der Ansprüche 1 bis 12 für einen Reaktor (1), der einen viereckigen horizontalen Querschnitt aufweist, der vorzugsweise rechteckig langgestreckt ist, **dadurch gekennzeichnet, dass** sie wenigstens eine Luftführung (3) umfasst, die sich ganz entlang von wenigstens einer der Seiten, vorzugsweise einer langen Seite, des Querschnitts erstreckt und Zufuhröffnungen (12) und gravitäre Verteiler (13) speist, die mit im Wesentlichen regelmäßigen Abständen entlang der Seite des Querschnitts des Reaktors (1) angeordnet sind.

15. Vorrichtung nach Anspruch 14, **dadurch gekennzeichnet, dass** sie wenigstens zwei Luftführungen (3', 3") umfasst, von denen sich jede entlang jeweils einer der zwei langen Seiten erstreckt, die dem rechteckigen Querschnitt des Reaktors (1) gegenüberliegen, wobei die beiden Luftführungen (3', 3") vorzugsweise eine gemeinsame Zuführung (11') durch ihr Ende aufweisen, das sich an einer selben kurzen Seite des Querschnitts befindet.

16. Vorrichtung nach einem der Ansprüche 14 und 15, **dadurch gekennzeichnet, dass** die gravitären Verteiler (13) einander identisch sind und ihr unteres Ende (15) im Wesentlichen auf einer mittigen Achse des Querschnitts des Reaktors (1) ausgerichtet ist, vorzugsweise auf der mittigen Längsachse des Querschnitts.

17. Vorrichtung nach einem der Ansprüche 14 und 15, **dadurch gekennzeichnet, dass** die Längen der gravitären Verteiler (13', 13") so angepasst sind, dass ihre unteren Enden (15', 15") abwechselnd in Quincunx-Anordnung in Bezug auf eine mittige Achse des Querschnitts, vorzugsweise die mittige Längsachse des Schnitts, angeordnet sind.

18. Klärreaktor für wenigstens einen verschmutzenden Abstrom eines gasartigen aufsteigenden Stroms (F) in dem Reaktor (1, 1'), insbesondere eines gasartigen Stroms, der aus Aluminium-Elektrolyse-Behältern oder Anoden-Backöfen zur Aluminium-Elektrolyse hervorgeht, und wobei in den Reaktor (1, 11) ein pulverartiger Stoff als chemisches und/oder physikalisches Neutralisationsmittel der verschmutzenden Abströme, insbesondere von frischem und/ oder wiederverwertetem Aluminiumoxid, oder von Kokspulver, eingeführt und verteilt ist, **dadurch gekennzeichnet, dass** der Reaktor (1, 1') mit einer Vorrichtung zur Zufuhr und Verteilung von pulverartigem Stoff nach einem der Ansprüche 1 bis 17 ausgestattet ist, die von der Art ist, dass Fluorverbindungen, insbesondere FH, gasartige Fluorverbindungen, Teere, Peche und andere organische Verbindungen wie aromatische polyzyklische Kohlenwasserstoffe durch Adsorption oder insbesondere chemische Reaktion neutralisiert werden.
